# EUROPEAN PATENT SPECIFICATION

(11) **EP 2 039 601 B1**
(45) Date of publication and mention of the grant of the patent: **30.12.2009**
(21) Application number: 08160525.5
(22) Date of filing: 16.07.2008
(51) Int. Cl.: B62M 7/12, B62M 9/06, F16H 9/18, F16H 63/06

(54) **Power unit**
Triebwerk
Bloc de puissance

(30) Priority: 07.09.2007 JP 2007233300
(43) Date of publication of application: 25.03.2009
(73) Proprietor: Honda Motor Co., Ltd., Tokyo 107-8556 (JP)
(72) Inventor: Ishikawa, Hideo, Saitama 351-0193 (JP); Morita, Go, Saitama 351-0193 (JP); Ikeda, Naoki, Saitama 351-0193 (JP)
(74) Representative: Rupp, Christian

(56) References cited:
- EP-A- 0 558 752
- EP-A- 1 614 939
- EP-A- 1 921 352

## Description

The present invention relates to the placement of heavy objects in a power unit composed of an engine and a transmission.

EP 1 614 939 A discloses a conventional-type power unit according to the preamble of claim 1 with an electric motor for controlling the drive pulley, a reduction-gear mechanism for the drive-pulley control unit, and a balancer are placed at the rear side of the crankshaft. Such heavy objects need to be placed in consideration of a layout achieving a good weight balance while keeping an engine compact in size. For example, in the unit-swing type power unit, the portion at the rear side of the crankshaft has a larger movement stroke than the portion at the front side of the crankshaft, so that the heavy object placed at the rear side of the crankshaft greatly affects the cushioning properties and the drive-ability. For this reason, it is preferable that heavier objects among the constituent members of the power unit should be placed at the front side of the crankshaft whenever possible.

The present invention aims to provide a power unit designed in consideration of a layout with a good weight balance while keeping an engine compact in size.

For the purpose of achieving the above-mentioned objects, a first aspect of the present invention provides a power unit including: an engine, a transmission casing, a V-belt type continuously variable transmission, and an electric motor for drive-pulley control. The engine includes a cylinder block, a crankcase, and a balancer. The transmission casing extends rearwards from the crankcase of the engine. The V-belt type continuously variable transmission is installed in the transmission casing, and transmits the drive power from the engine to a drive wheel. The electric motor for drive-pulley control controls the width of the groove of a drive pulley in the V-belt type continuously variable transmission by means of a reduction gear mechanism for drive-pulley control unit. In the power unit, when viewed from a side, the electric motor for drive-pulley control, the reduction gear mechanism for the drive-pulley control unit, and the center of the rotational axis of the balancer are placed between a joint plane where the cylinder block is coupled to the crankcase and a plane which passes on the center of the crankshaft and which is parallel to the joint plane.

A second aspect of the present invention provides the power unit according to the first aspect with the following additional characteristic features. An engine hanger is disposed in a vicinity of the joint plane.

A third aspect of the present invention provides the power unit according to any one of the first and the second aspects with the following additional characteristic features. The electric motor for drive pulley control and the reduction gear mechanism for drive-pulley control unit are disposed above the crankshaft. In addition, a reed valve for supplying secondary air is disposed at the other side of the cylinder axis.

A fourth aspect of the present invention provides the power unit according to any one of the first to the third aspects with the following additional characteristic features. The electric motor for drive-pulley control is mounted from the outer side of the transmission casing.

In the first aspect of the present invention, when viewed from a side, the electric motor for drive-pulley control, the reduction gear mechanism for the drive-pulley control unit, and the center of the balancer are placed between the joint plane where the cylinder block is coupled to the crankcase and a plane which passes on the center of the crankshaft and which is parallel to the joint plane. The above-described concentrated placement of the electric motor for drive-pulley control, the reduction gear mechanism for the drive-pulley control unit and the balancer allows the power unit to be made compact in size. The concentration, thus achieved, of the heavy objects on the center of the power unit, which is composed of the engine and the transmission, helps the balance to be maintained, and results in better running performance.

In the second aspect of the present invention, the concentrated placement of the heavy objects on a position near the engine hanger, which is the point about which the power unit moves swinging, contributes to the reduction of the vibration.

In the third aspect of the present invention, the electric motor for drive pulley control and the reduction gear mechanism for drive-pulley control unit are disposed above the crankshaft. Such placement leaves an extra space at the other side of the cylinder axis, that is, below the cylinder axis. Accordingly, a space for placing the reed valve for supplying secondary air can be obtained on the side surface of the cylinder block, so that the piping arrangement for supplying secondary air is simplified.

In the fourth aspect of the present invention, the electric motor for drive-pulley control is mounted from the outer side of the transmission casing. Accordingly, the maintenance work for the electric motor for drive-pulley control is made easier.

### [Brief Description of the Drawings]

Fig. 1 is a side view of a motorcycle 1 on which a power unit P according to an embodiment of the present invention is mounted.
Fig. 2 is an enlarged view of a rear portion of the motorcycle 1.
Fig. 3 is a side view of the power unit P.
Fig. 4 is a cross-sectional view that is taken so that the principal rotational shafts of the power unit P can be included in the view.
Fig. 5 is an enlarged sectional view showing a drive pulley 12 and the peripheral members thereof.
Fig. 6 is an enlarged sectional view taken along the line VI-VI in Fig. 5.
Fig. 7 is a view showing the front surface of a control-unit gear cover 36.
Fig. 8 is a sectional view taken along the line VIII-VIII in Fig. 7.
Fig. 9 is a view showing the back surface of the control-unit gear cover 36.
Fig. 10 is a view shown as indicated by the arrow X in Fig. 7.
Fig. 11 is a view showing a state in which the electric motor 28 for the drive-pulley control and a movable-half stroke sensor 30 are attached to the control-unit gear cover 36.
Fig. 12 is an enlarged sectional view showing a driven pulley 13, a power-system reduction gear mechanism 16, and the peripheral members of these two.

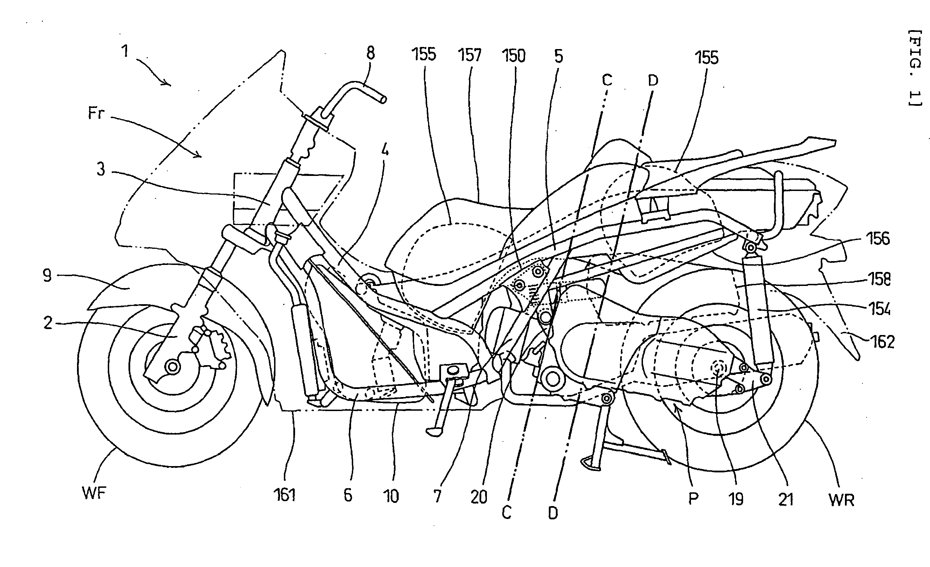

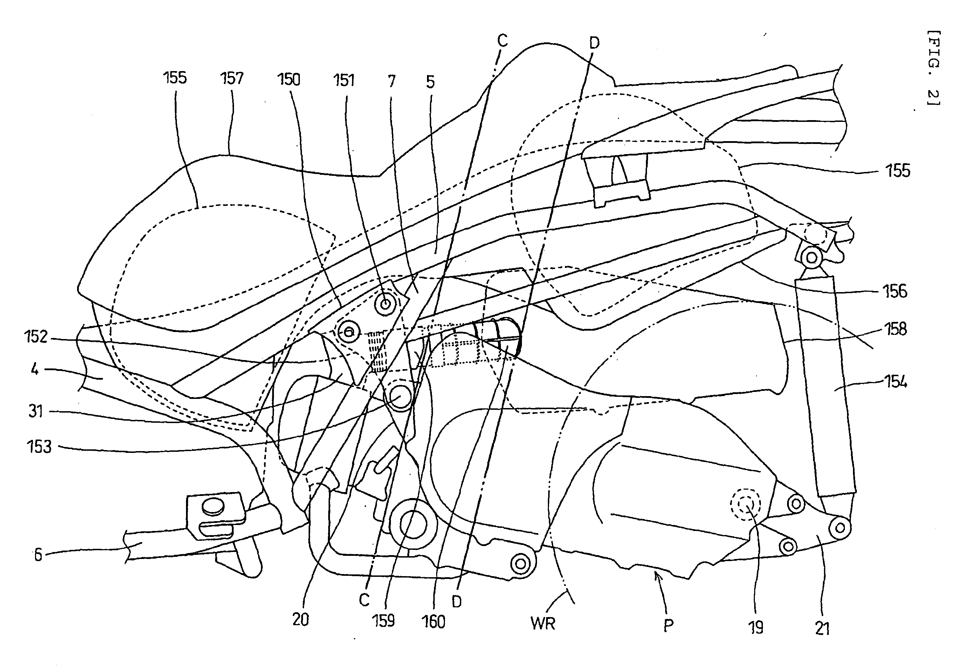

Fig. 1 is a side view of a motorcycle 1 on which a power unit P according to an embodiment of the present invention is mounted. Fig. 2 is an enlarged view of a rear portion of the motorcycle 1. Fig. 1 shows a vehicle-body frame Fr of the motorcycle 1 that includes a head pipe 3, a main frame 4, a right-and-left pair of rear frames 5, a down frame 6, and middle frames 7. The head pipe 3 supports a front fork 2, which is allowed to move rotationally. The main frame 4 extends downwards to the rear from the head pipe 3. Each of the rear frames 5 has one of its ends connected to a middle portion of the main frame 4, and extends upwards to the rear. The down frame 6 extends downwards from the head pipe 3, then turns rearwards, and connected to the lower end of the main frame 4. The middle frames 7 each connect the lower end of the main frame 4 and a middle portion of the rear frames 5 each. The front fork 2 pivotally supports a front wheel WF at the lower ends thereof. A steering handle bar 8 is coupled above the front fork 2. The front fork 2 supports a front fender 9 to cover upper front of the wheel. A fuel tank 10 is disposed between the main frame 4 and the down frame 6.

Now, refer also to Fig. 2. Each of pivot plates 150 is fixed to each side surfaces of the corresponding rear frame 5 and the corresponding middle frame 7. The pivot plates 150 each have a pivot shaft 151 to hold a suspension link 152. Engine hangers 20 are formed integrally with the power unit P. The suspension link 152, the engine hangers 20, and a support shaft 153 are used to suspend the power unit P in a swingable manner with its cylinder axis slightly upwards to the front. A rear cushion 154 is disposed between one of the rear frames 5 and a rear-end bracket 21 of the power unit P. A rear axle 19 extends rightwards from a rear portion of the power unit P, and a rear wheel WR is attached on the rear axle 19. The rear wheel WR is driven by the power unit P. A storage box 156 is disposed above the power unit P to store helmets 155 and the like. A riding seat 157 is disposed above the storage box 156. An air cleaner 158 is disposed at the right-hand side of and above the power unit P, and is connected to a throttle body 159 with a connection pipe 160 while an inlet pipe 31 is also connected to the throttle body 159. Fig. 1 also shows a vehicle-body cover 161 attached to the vehicle-body frame Fr and composed of plural, synthetic-resin members connected to one another. The vehicle-body cover 161 covers the power unit P and other apparatuses. In addition, a rear fender 162 is disposed at the rear side of the vehicle.

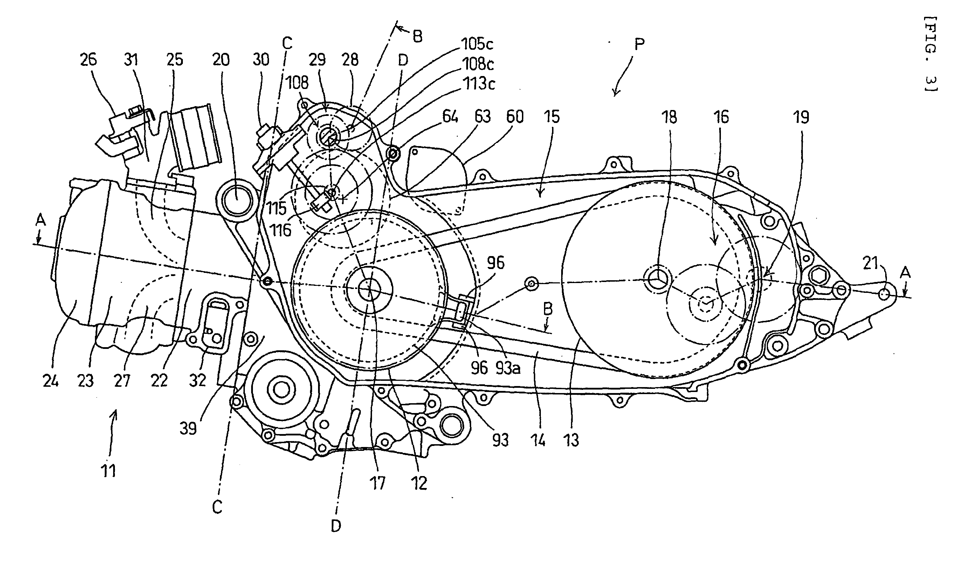

Fig. 3 is a side view of the power unit P, and illustrates the power unit P in a state where a part of its internal structure can be seen. An engine 11 occupies a front-side portion of the power unit P. AV-belt type continuously variable transmission 15 is disposed at a position extending contiguously rearwards from the engine 11. The V-belt type continuously variable transmission 15 is composed of a drive pulley 12, a driven pulley 13, and an endless V-belt 14 that is looped around the drive pulley 12 and the driven pulley 13. A power-system reduction gear mechanism 16 is disposed at the rear side of the V-belt type continuously variable transmission 15. A crankshaft 17 is served as a drive shaft for the drive pulley 12. The rotational shaft of the driven pulley 13, that is a driven shaft 18, serves as the input shaft for the power-system reduction gear mechanism 16. The output shaft of the power-system reduction gear mechanism 16 is a rear axle 19 onto which the rear wheel WR (see Fig. 1) is attached. The right and left pair of engine hangers 20 are formed in an upper portion of a front portion of the power unit P. The engine hangers 20 are connected to the lower end of the suspension link 152 (see Fig. 1) using a pivot shaft 153. The lower end of the rear cushion 154 (see Fig. 1) is attached to the rear-end bracket 21 disposed on the rear side of the power unit P, and the rear cushion 154 is disposed between the rear-end bracket 21 and the one of the rear frames 5.

The engine 11 is a four-stroke cycle engine and is located in a front portion of the power unit P. To form the engine 11, a cylinder block 22, a cylinder head 23 and a cylinder-head cover 24 are stuck in this order forwards from the front-end face of a crankcase 39. The engine 11 thus formed tilts forwards to such a great extent that the engine 11 becomes nearly horizontal, lying on its side. An inlet port 25 is formed in the upper side of the cylinder head 23, and the inlet pipe 31 is attached to the inlet port 25. A fuel injection valve 26 is assembled to the inlet pipe 31. The throttle body 159, the air cleaner 158 (see Fig. 2) and the like are also connected to the inlet pipe 31 at portions that are located at the rear side of the injection valve 26. An exhaust port 27 is formed in the lower side of the cylinder head 23. An unillustrated exhaust pipe extends from the exhaust port 27. The exhaust pipe is then bent rearwards, and is connected to a muffler.

An electric motor 28 for drive pulley control and a reduction gear mechanism 29 for drive-pulley control unit are disposed above the crankshaft 17 located on the front side of the power unit P. In the reduction gear mechanism 29, a stroke sensor 30 of the drive-pulley movable half is disposed. The stroke sensor 30 of the drive-pulley movable half is provided with a worm wheel 116, which engages with a worm 115 disposed on one of the intermediate gears.

A reed valve 32 for supplying secondary air is disposed in a lower portion on the left-hand side of the cylinder block 22. The reed valve 32 for supplying secondary air is disposed at the entrance of the air passage so as to feed fresh air to the exhaust port 27 for the purpose of achieving complete combustion of the incomplete combusted gas. Only when the pressure in the exhaust port 27 becomes negative, the air is to be taken in through the reed valve 32 for supplying secondary air. Here, note that, in this embodiment, the electric motor 28 for drive pulley control and the reduction gear mechanism 29 for drive-pulley control unit are disposed above the crankshaft 17. Such placement leaves an extra space at the other side of the cylinder axis, that is, below the cylinder axis. Accordingly, the reed valve 32 for supplying secondary air can be disposed on the side surface of the cylinder block 22 in this extra space, so that the piping arrangement for supplying secondary air can be simplified.

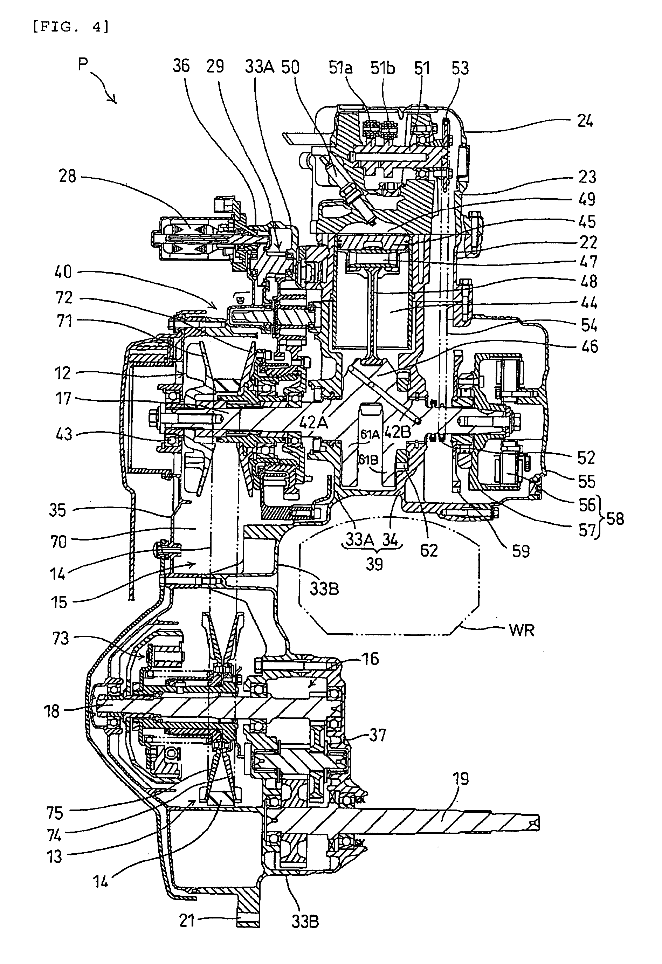

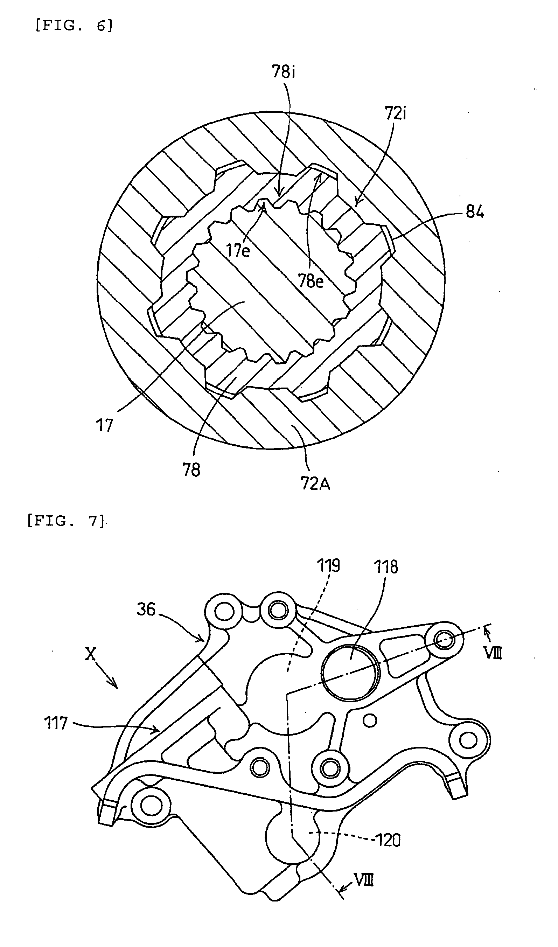

Fig. 4 is a cross-sectional view that is taken so that the principal rotational shafts of the power unit P can be included in the view. In Fig. 4, both the section taken along the line A-A in Fig. 3 and the section taken along the line B-B in the same drawing are shown in a single plane. In the power unit P, the plural rotational shafts that extend in the right-and-left directions in Fig. 4 are supported by shell bodies including a left-hand side crankcase 33A, a transmission case 33B that is coupled contiguously to the rear side of the left-hand side crankcase 33A, a right-hand side crankcase 34, a transmission-case cover 35, a control-unit gear cover 36, and a rear-side gear cover 37. Each of the transmission case 33B and the transmission case cover 35 has a shape that is longitudinal in the front-and-rear directions of the vehicle. The shape of the control-unit gear cover 36 will be described later with reference to Figs. 7 to 10.

The left-hand side crankcase 33A and the right-hand side crankcase 33B together form a crankcase 39. The transmission case 33B, the transmission-case cover 35, the control-unit gear cover 36, and the rear-side gear cover 37 together form a transmission casing 40. In the transmission casing 40, the portion located between the transmission case 33B and the transmission-case cover 35 serves as a transmission chamber 70 in which the V-belt type continuously variable transmission 15 is installed. The portion located between the left-hand side crankcase 33A and the control-unit gear cover 36 serves as a portion in which the reduction gear mechanism 29 for the drive-pulley control unit is installed. The portion located between the transmission case 33B and the rear-side gear cover 37 serves as a portion in which the power-system reduction gear mechanism 16 is installed. The cylinder block 22, the cylinder head 23, and the cylinder-head cover 24 are stuck in this order forwards from the front end of the crankcase 39.

The crankshaft 17 is rotatably supported by the left-hand side crankcase 33A and the right-hand side crankcase 34 respectively with journal bearings 42A and 42B set in between. In addition, the left-hand end of the crankshaft 17 is rotatably supported by the transmission case cover 35 with a ball bearing 43 set in between. A cylinder bore 44 is formed in the cylinder block 22, and a piston 45 is slidably fitted into the cylinder bore 44. An end of a connecting rod 48 is pivotally supported by the crankshaft 17 by use of a crank pin 46. Likewise, the other end of the connecting rod 48 is pivotally supported by the piston 45 by use of a piston pin 47. The reciprocal movement of the piston 45 rotates the crankshaft 17. A combustion chamber 49 is formed in the bottom face of the cylinder head 23, which faces the top-end face of the piston 45. A spark plug 50 is installed from a side portion of the cylinder head 23 while the tip end of the spark plug 50 faces the combustion chamber 49.

At a position between the cylinder head 23 and the cylinder head cover 24, a cam shaft 51 is rotatably supported in parallel to the crankshaft 17. Cams 51a and 51b are disposed on the cam shaft 51. The cams 51a and 51b drive to open and close the intake and the exhaust valves. A drive sprocket 52 is disposed on a right-hand side of the crankshaft 17 while a driven sprocket 53 is disposed on the right-hand side end of the cam shaft 51. A cam chain 54 are looped around the drive sprocket 52 and the driven sprocket 53 so that the cam shaft 51 can be driven to rotate with the crankshaft 17.

A right-hand side crankcase cover 55 is disposed at the outer side of the right-hand side crankcase 34. A stator 56 is fixed on the inner surface of the right-hand side crankcase cover 55. A rotor 57 is fixed on the crankshaft 17 and surrounds the stator 56. The stator 56 and the rotor 57 together form an alternator 58. A starter driven gear 59 is disposed at a position adj acent to the alternator 58. By means of the starter driven gear 59, the crankshaft 17 can be driven to rotate by the starter motor 60 (see Fig. 3)

Fig. 4 shows a right-hand side crank web 61B and a balancer drive gear 62 that is adjacent to the right-hand side crank web 61B. The balancer drive gear 62 drives a balancer 63 that rotates above the portion between the left-hand side crank web 61A and a right-hand side crank web 61B. Fig. 3 shows the trajectory of the outer perimeter of the balancer 63 and the position of a balancer shaft 64 when viewed from a side of the power unit.

In Fig. 3, a plane C-C is the joint plane where the cylinder block 22 is coupled to the crankcase 39. The heavy objects, that are the electric motor 28 for drive-pulley control, the reduction gear mechanism 29 for the drive-pulley control unit, and the balancer 63, are placed between the joint plane C-C and a plane D-D which passes on the center of the crankshaft 17 and which is parallel to the joint plane C-C. The position between the plane C-C and the plane D-D is close to the center of the power unit P. In addition, the engine hangers 20 are disposed near the joint plane C-C, that is, near the heavy objects of the power unit P.

The above-described concentrated placement of the electric motor 28 for drive-pulley control, the reduction gear mechanism 29 for the drive-pulley control unit and the balancer 63 allows the power unit P to be made compact in size. The concentration, thus achieved, of the heavy objects on the center of the power unit P helps the balance to be maintained, and results in better running performance. The concentrated placement of the heavy objects on a position near the engine hangers 20, about which the power unit P moves swinging, contributes to the reduction of the vibration.

In Fig. 4, the transmission chamber 70 in which the V-belt type continuously variable transmission 15 of the power unit P is installed is formed between the transmission case 33B and the transmission-case cover 35. What serves as the drive shaft of the V-belt type continuously variable transmission 15 is the crankshaft 17. The left-hand side end portion of the crankshaft 17 sticks out from the left-hand side crankcase 33A into the transmission chamber 70 located at the left side of the left-hand side crankcase 33A. The driven pulley 12 of the V-belt type continuously variable transmission 15 is disposed on this sticking-out portion. The drive pulley 12 is composed of a drive-pulley fixed half 71 and a drive-pulley movable half 72.

The driven shaft 18 of the V-belt type continuously variable transmission 15 is rotatably supported by the transmission-case cover 35, transmission case 33B, and the rear-side gear cover 37. The driven pulley 13 of the V-belt type continuously variable transmission 15 is disposed on this driven shaft 18 with a centrifugal clutch 73 placed in between. The driven pulley 13 is composed of a driven-pulley fixed half 74 and a driven-pulley movable half 75.

The endless V-belt 14 is looped around the drive pulley 12 and the driven pulley 13, and thus the rotation of the drive pulley 12 is transmitted to the driven pulley 13. When the number of revolution of the driven pulley 13 exceeds a predetermined number, the centrifugal clutch 73 disposed between the driven pulley 13 and the driven shaft 18 gets connected, and the driven shaft 18 starts revolving. The rotational torque of the driven shaft 18 is subjected to speed reduction in the power-system reduction gear mechanism 16, and then transmitted to the rear axle 19. The torque is then used for rotating the rear wheel WR fixed on the rear axle 19 to form a single body.

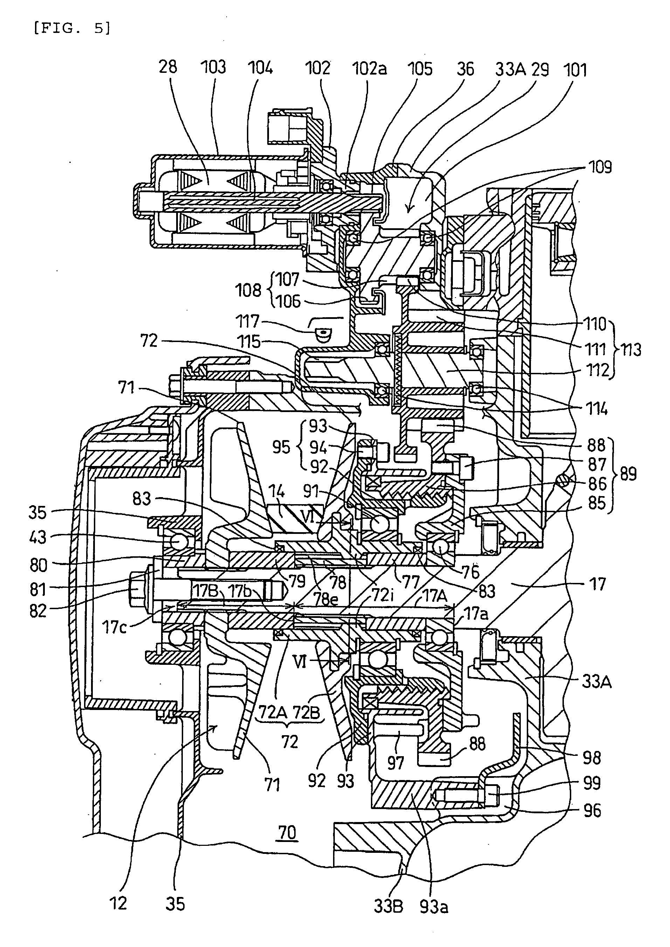

Fig. 5 is an enlarged sectional view showing a state in which the drive pulley 12 and the peripheral members thereof are assembled to the crankshaft 17. The drive pulley 12 is composed of the drive-pulley fixed half 71 and the drive-pulley movable half 72. In the sticking-out portion of the crankshaft 17 into the transmission chamber 70, a first small-diameter portion 17A and a second small-diameter portion 17B are formed in order of the closeness to the center of the crankshaft 17. The first small-diameter portion 17A is located between shoulders 17a and 17b, while the second small-diameter portion 17B is located between the shoulder 17b and the crankshaft-end portion 17c. The shaft-end side half portion of the first small-diameter portion 17A is splined, and so is the shaft-end side half portion of the second small-diameter portion 17B. The first small-diameter portion 17A has a larger diameter than the second small-diameter portion 17B so as to prevent the erroneous assembly.

Onto the first small-diameter portion 17A, the inner race of a ball bearing 76, a first support sleeve 77, and a guide sleeve 78 are fitted. Meanwhile, onto the second small-diameter portion 17B, a second support sleeve 79, the drive-pulley fixed half 71, and a collar 80 are fitted. The sleeves 77, 78, 79, and the collar 80 are made of a steel while the drive-pulley fixed half 71 is made of an aluminum alloy. A screw hole is formed in the end portion of the crankshaft 17. To secure tightly the members mentioned above, a bolt 82 is screwed, into the screw hole with a washer 81 placed in between. The members thus fixed immovably in the direction in which the crankshaft 17 extends. Among the members mentioned above, the guide sleeve 78 has its inner surface splined, and is fitted onto the splined portion of the first small-diameter portion 17A. The drive-pulley fixed half 71 has its inner surface of the center hole splined, and is fitted onto the splined portion of the second small-diameter portion 17B. Accordingly, the guide sleeve 78 and the drive-pulley fixed half 71 are thus fixed onto the crankshaft 17. The guide sleeve 78 and the drive-pulley fixed half 71 are not allowed to rotate independently of the crankshaft 17, but allowed to rotate only together with the crankshaft 17. Incidentally, the left-hand side end of the crankshaft 17 is supported by the transmission case cover 35 with the collar 80 and the ball bearing 43 set in between.

The drive-pulley movable half 72 is composed of a steel movable-half hub portion 72A located at the center and an aluminum-alloy umbrella-shaped portion 72B. This integrated driven-pulley movable half 72 are formed by molding. Specifically, the umbrella-shaped portion 72B is molded to the end portion of the movable-half hub portion 72A that has been fabricated in advance.

A protruding spline 72i that protrudes inwards is formed in the inner circumference of the drive-pulley movable-half hub portion 72A. The protruding spline 72i is fitted into the outer-circumference spline 78e that is formed in the outer circumference of the guide sleeve 78. Since the outer-circumference spline 78e of the guide sleeve 78 is longitudinal in the axial direction, the protruding spline 72i is allowed to slide inside the guide grooves in the axial direction. Accordingly, the drive-pulley movable half 72 is held so as to be incapable of rotating independently of the crankshaft 17, but is allowed to move in the axial direction. The grooved outer-circumference spline 78e of the guide sleeve 78 is greased, so as to achieve smooth sliding movement of the protruding spline 72i of the movable-half hub portion 72A. A sealing 83 is provided in each of the two end portions of the movable-half hub portion 72A for the purpose of preventing the leaking-out of the grease and of preventing the entry of dusts.

Fig. 6 is an enlarged sectional view taken along the line VI-VI in Fig. 5. A spline 17e formed in the crankshaft 17 meshes with an inner-circumference spline 78i formed in the guide sleeve 78. Both of these splines 17e and 78i are involute splines. The outer-circumference spline 78e of the guide sleeve 78 and the protruding spline 72i that meshes therewith are also involute splines. Gaps 84 are formed between the outer circumferential surface of the guide sleeve 78 and the inner circumferential surface of the movable-half hub portion 72A so that the air and the grease can move along with the movement of the protruding spline 72i. By means of the splines 17e, 78i, 78e, and 72i, the drive-pulley movable half 72 rotates, together with the crankshaft 17, by the torque transmitted from the crankshaft 17.

In Fig. 5, the inner race of the ball bearing 76 is fitted onto the crankshaft 17, immovably in the axial direction. Meanwhile, the outer race of the ball bearing 76 is held by a ball-bearing outer-race holding member 85. Accordingly, the ball-bearing outer-race holding member 85 is immovable in the axial direction either. A flange portion is formed on the outer circumference of the ball-bearing outer-race holding member 85, and a female-thread cylindrical member 86 is bolted by a bolt 87 to the outer circumference of the flange portion so as to form a single body. A large-diameter gear 88 is formed in the outer circumference of the flange portion of the female-thread cylindrical member 86. The ball-bearing outer-race holding member 85, the female-thread cylindrical member 86, the bolt 87, and the large-diameter gear 88 together form a female-thread assembly 89. The female-thread assembly 89 is rotatably supported by the crankshaft 17 with the help of the ball bearing 76, but is immovable in the axial direction. To put it other way, the female-thread assembly 89 is capable of rotating independently of the crankshaft 17 at a predetermined position on the crankshaft in the axial direction thereof. The large-diameter gear 88 of the female-thread assembly 89 is driven to rotate by the electric motor 28 for drive-pulley control and by the reduction gear mechanism 29 for the drive-pulley control unit.

Onto the outer circumference of the movable-half hub portion 72A of the drive pulley 12, the inner race of a ball bearing 91 is fitted with the relative movement immovable in the axial direction. A male-thread cylindrical member 92 is provided to hold the outer race of the ball bearing 91 so as to form a single integrated body. The male-thread portion formed in the outer circumference of the male-thread cylindrical member 92 engages with the female-thread portion formed in the inner circumference of the female-thread cylindrical member 86.

A flange portion is formed in the male-thread cylindrical member 92, and a ring-shaped member 93 is fixed to the flange portion with a bolt 94. The ring-shaped member functions as a stopper to stop the rotation of the male-thread cylindrical member 92. The male-thread cylindrical member 92, the ring-shaped member 93, and the bolt 94 together form a single, male-thread assembly 95. A part of the circumference of the ring-shaped member 93 extends rearwards. The outer-end portion of the extending portion turns to the right-hand side in the drawing and the extending portion further extends rightwards passing by the outer side of the large-diameter gear 88 of the female-thread assembly 89. This extending portion is a rotation stopper 93a. The rotation stopper 93a is placed between a pair of guide pieces 96, 96 that are formed so as to protrude from the inner surface of the transmission case 33B into the transmission chamber 70 (see also Fig. 3). The rotation stopper 93a is thus restricted its rotation by the guide pieces 96, 96. In addition, the movement of the rotation stopper 93a in the direction in which the crankshaft 17 extends is guided by the guide pieces 96, 96. Accordingly, when the female-thread assembly 89 rotates, the male-thread assembly 95 that is contiguous to the rotation stopper 93a is restricted its rotation. In addition, the rotation stopper 93b is guided by the guide pieces 96, 96, to move in the direction in which the crankshaft extends. Accordingly, the male-thread assembly 95 moves in the axial direction of the crankshaft 17. The female-thread assembly 89 and the male-thread assembly 95 together form a thread-operate type feed mechanism to move the drive-pulley movable half 72.

A left-hand side stopper 97 is formed integrally with the ring-shaped member 93. The left-hand side stopper 97 is used to detect the limit for the rightward movement of the male-thread assembly 95. A right-hand side stopper 98 is attached, with a bolt 99, to the right-hand side end of the rotation stopper 93a that extends from the ring-shaped member 93. The right-hand side stopper 98 is used to detect the limit for the leftward movement of the male-thread assembly 95.

The female-thread assembly 89 is driven to rotate by the electric motor 28 for drive-pulley control and by the reduction gear mechanism 29 for the drive-pulley control unit. The revolution of electric motor 28 is automatically controlled in response to the throttle opening angle and to the engine revolution. The control-unit gear cover 36 is attached to the left-hand side of the left-hand side crankcase 33A. A control unit gear chamber 101 is formed in the portion located between the control-unit gear cover 36 and the left-hand side crankcase 33A. The electric motor 28 is attached to the left-hand side outer surface of the control-unit gear cover 36 with a attachment plate 102 placed in between. A motor cover 103 is provided to cover the electric motor 28. The electric motor 28 has a rotational shaft 104 in which a pinion 105 is carved. The pinion 105 enters the control-unit gear chamber 101. Since the electric motor 28 is mounted from the outer side of the control-unit gear cover 36, which forms a part of the transmission casing 40, the maintenance work for the electric motor 28 is made easier.

A large-diameter gear 106 that meshes with the pinion 105 and a small-diameter gear 107 that is adjacent to the large-diameter gear 106 together form a first intermediate gear 108. The first intermediate gear 108 is rotatably supported by the left-hand side crankcase 33A and the control-unit gear cover 36 with ball bearings 109, 109 respectively set in between.

A large-diameter gear 110 is provided so as to mesh with the small-diameter gear 107. A small-diameter gear 111 is adjacent to and is integrally formed with the large diameter gear 110. The large-diameter gear 110 and the small-diameter gear 111 are fitted onto a rotational shaft 112 and integrated together to form a second intermediate gear 113. The second intermediate gear 113 is rotatably supported by the left-hand side crankcase 33A and the control-unit gear cover 36 respectively with ball bearings 114, 114 set in between. The small-diameter gear 111 meshes with the large-diameter gear 88 of the female-thread assembly 89 described above. A worm 115 is carved in the left-hand side end portion of the rotational shaft 112 of the second intermediate gear 113. The worm 115 meshes with a worm wheel 116 (see Fig. 3) disposed at the tip end of the movable-half stroke sensor 30. An attachment portion 117 for the stroke sensor 30 is formed on the control-unit gear cover 36 and at a position near the worm 115.

Now, suppose a case where the electric motor 28 rotates in the forward direction in response to the control instruction. Then, the power is transmitted via the pinion 105, the first intermediate gear 108, and the second intermediate gear 113 so as to rotate the female-thread assembly 89. Accordingly, a thrust force in the axial direction of crankshaft, received from the threaded portion of the female-thread assembly 89, acts on the threaded portion of the male-thread assembly 95 which meshes with the threaded portion of the female-thread assembly 89 and which is thus incapable of rotating. The thrust force moves the male-thread assembly 95 in the axial direction of the crankshaft 17. The thrust force that acts on the threaded portion of the male-thread cylindrical member 92 is transmitted, via the ball bearing 91, to the drive-pulley movable-half hub portion 72A. Accordingly, the drive-pulley movable-half 72 moves in the axial direction of the crankshaft 17, so that the distance between the drive-pulley movable half 72 and the drive-pulley fixed half 71 is narrowed. As a consequence the V-belt 14 moves towards the outer circumference. Now, suppose the opposite case, where the electric motor 28 rotates in the reverse direction in response to the control instruction. Then, through a process that is reversal to the one described above, the distance between the drive-pulley fixed half 71 and the drive-pulley movable half 72 is widened. As a consequence, the V-belt 14 moves towards the center. In this respect, Fig. 3 shows a rotation center 105c of the pinion 105, a rotation center 108c of the first intermediate gear 108, and a rotation center 113c of the second intermediate gear 113.

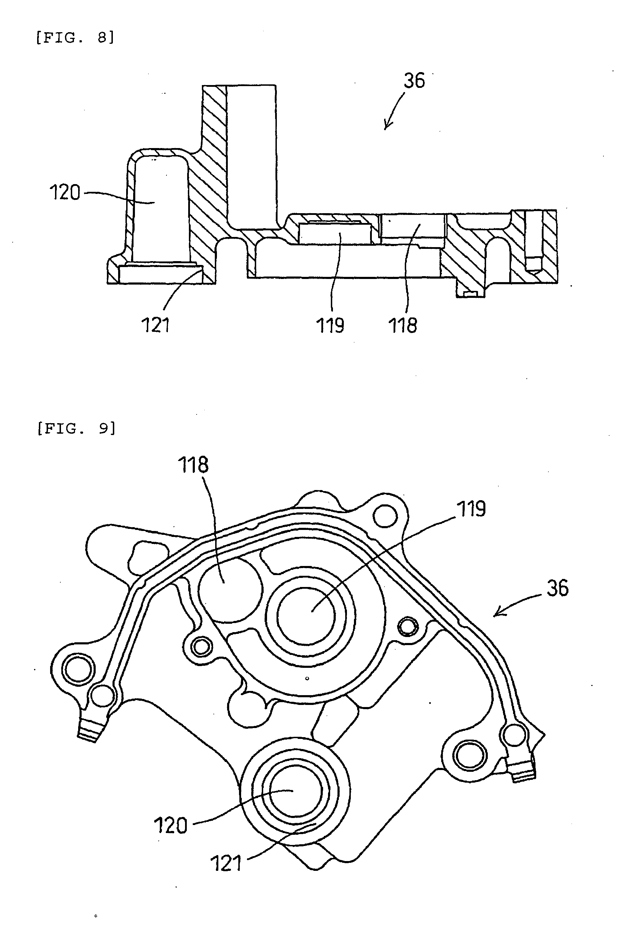

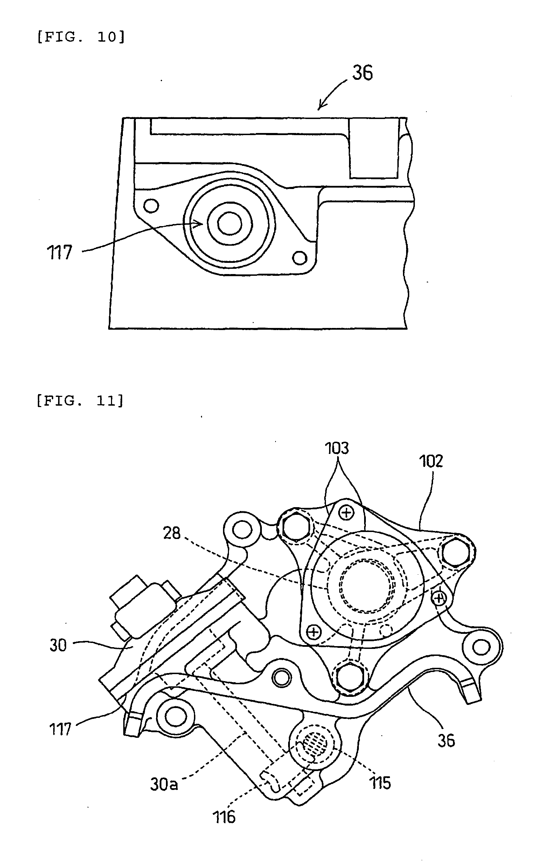

Figs. 7 to 10 illustrate control-unit gear cover 36 that forms a part of the transmission casing 40. Fig. 7 is a view showing the left-hand side surface in a case where the control-unit gear cover 36 is attached to the left-hand side crankcase 33A. Fig. 8 is a sectional view taken along the line VIII-VIII in Fig. 7. Fig. 9 is a view showing the back side of the surface shown in Fig. 7. Fig. 10 is a view shown as indicated by the arrow X in Fig. 7, and illustrates the movable-half stroke-sensor attachment portion 117 viewed from the front side. These drawings show: a through hole 118, into which a center protruding portion 102a of the electric-motor attachment plate 102 (see Fig. 5) is inserted; a recessed portion 119, which holds the ball bearing 109 of the first intermediate gear 108; and a deeply recessed portion 120, in which the worm 115 at the tip end of the rotational shaft 112 of the second intermediate gear 113 (see Fig. 5) is contained. A holding portion 121 for the ball bearing 114 is formed at the entrance of the deeply recessed portion.

Fig. 11 shows that the electric motor 28 for the drive-pulley control is attached to the front-side surface of the control-unit gear cover 36 with the attachment plate placed in between, and that the motor cover 103 is attached to cover the motor 28.

Fig. 11 also shows that the movable-half stroke sensor 30 is attached to the stroke-sensor attachment portion 117 and that a rotational shaft 30a of the stroke sensor 30 is inserted into the control-unit gear chamber 101 with the worm wheel 116 at the tip end of the rotational shaft 30a meshing with the worm 115 of the second intermediate gear 113 (see Fig. 5). The movable-half stroke sensor 30 detects the amount of rotation of the second intermediate gear 113 by way of the meshing state of the worm gears, which are the worm 115 and the worm wheel 116. On the basis of the above-mentioned, detected amount of rotation of the second intermediate gear 113, the movable-half stroke sensor 30 detects the position to which the drive-pulley movable half 72 moves. What is noticeable here is the formation of the stroke-sensor attachment portion 117 on the control-unit gear cover 36, which has a simple shape. Such formation eliminates the need for the processing to form the stroke-sensor attachment portion 117 in the crankcase 39, which has a complex shape. This results in an increase in the productivity. In addition, the control-unit gear cover 36 is attached to the top portion of the crankcase 39. Accordingly, the starter motor 60 and the movable-half stroke sensor 30 can be positioned so that the mud and the water may be unlikely to attach to these apparatuses. In addition, covering this portion with the vehicle-body cover produces a smart appearance.

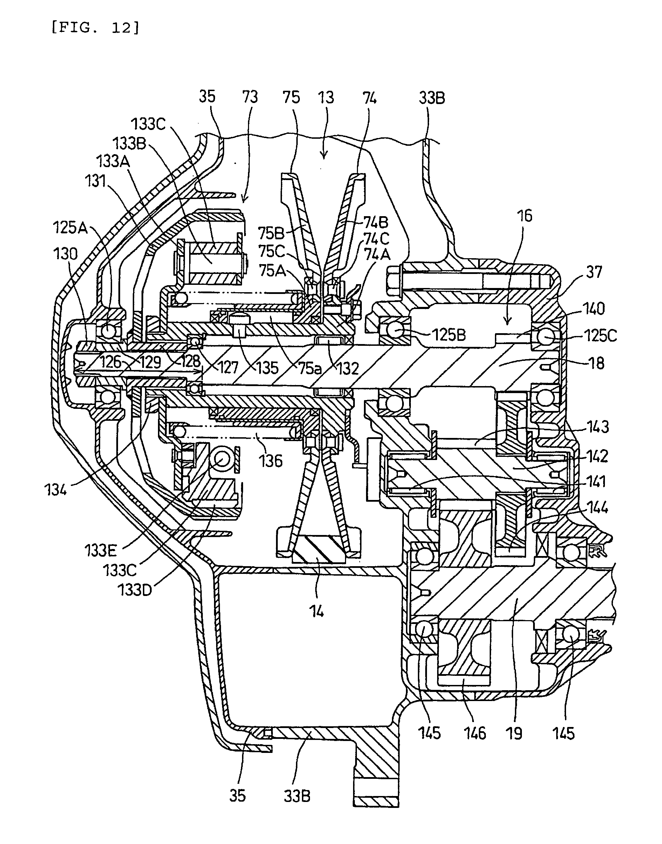

Fig. 12 is an enlarged sectional view showing the driven pulley 13, the power-system reduction gear mechanism 16, and the peripheral members of these two. The driven pulley 13, which is paired with the drive pulley 12 in the V-belt type continuously variable transmission 15, is composed of the driven-pulley fixed half 74 and the driven-pulley movable half 75. The fixed and the movable halves 74 and 75 are opposed to each other and are supported on the driven shaft 18. The driven-pulley fixed half 74 is an integrated body in which an aluminum-alloy umbrella-shaped portion 74B is coupled to an end of a steel fixed-half hub portion 74A with a rivet 74C while the driven-pulley movable half 75 is an integrated body in which an aluminum-alloy umbrella-shaped portion 75B is coupled to an end of a steel movable-half hub portion 75A with a rivet 75C.

The driven shaft 18 is rotatably supported by the transmission-case cover 35, the transmission case 33B, and the rear-side gear cover 37 respectively with ball bearings 125A, 125B, and 125C set in between. A left-hand side portion of the driven shaft 18 is formed into a small-diameter portion 126. A ball bearing 127, a support sleeve 128, and a collar 129 are fitted onto the small-diameter portion 126 in this order, and are fastened to one another to form a unit with a nut 130 that is screwed in the end portion of the driven shaft 18. The support sleeve 128 is splined to fit on the driven shaft 18. The ball bearing 125A is set between the transmission-case cover 35 and the collar 129.

The base portion of a bowl-shaped clutch outer 131 of the centrifugal clutch 73 is welded to the support sleeve 128, so that the clutch outer 131 rotates together with the driven shaft 18. The driven-pulley fixed-half hub portion 74A is supported on the outer circumference of the driven shaft 18 at a position located at the right-hand side of the clutch outer 131. The ball bearing 127 and a needle bearing 132 are set between the driven shaft 18 and the driven-pulley fixed-half hub portion 74A so that the driven-pulley fixed-half hub portion 74A can rotate independently of the driven shaft 18.

A support plate 133A is fixed to the left-hand end of the fixed-half hub portion 74A with a nut 134. The support plate 133A forms a part of a clutch inner 133 of the centrifugal clutch 73. The support plate 133A pivotally supports, with a pivot 133B, an arm 133C at the base-end portion thereof. A clutch shoe 133D is fixed to the tip end of the arm 133C. The arm 133C is biased by a spring 133E towards a side so that the clutch shoe 133D can move away from the inner circumferential surface of the clutch outer 131.

The movable-half hub portion 75A that supports the driven-pulley movable half 75 is disposed on the outer circumference of the fixed-half hub portion 74A that supports the clutch inner 133. The movable-half hub portion 75A thus disposed is slidable in the axial direction. A guide hole 75a that is longitudinal in the axial direction is formed in the movable-half hub portion 75A. A guide pin 135 that protrudes from the fixed-half hub portion 74A engages with the guide hole 75a, and is slidable freely. Accordingly, the guide pin 135 restricts the movable-half hub portion 75A from rotating independently of the fixed-half hub portion 74A. Meanwhile, the movable-half hub portion 75A, thus guided by the guide pin 135 and the guide hole 75a, is slidable on the fixed-half hub portion 74A in the axial direction. A coil spring 136 is set between the movable-half hub portion 75A and the support plate 133A, which is fixed to the fixed-half hub portion 74A so as to form an integrated body. The coil spring biases the movable-half hub portion 75A towards the right-hand side.

In the driven pulley 13 configured as described above, the movable-half umbrella-shaped portion 75B rotates together with the fixed-half umbrella-shaped portion 74B. In addition, the movable-half umbrella-shaped portion 75B is slidable freely in the axial direction, and is biased, by the coil spring 136, towards a side so that the movable-half umbrella-shaped portion 75B can approach the fixed-half umbrella-shaped portion 74B. The V-belt 14 is looped around the portion created between the two umbrella-shaped portions 74B and 75B, the umbrella-shaped portion 74B of the driven-pulley fixed half 74 and the umbrella-shaped portion 75B of the driven-pulley movable half 75, that are opposed to each other. The effective diameter of the driven pulley 13 varies in response to the change in the effective diameter of the drive pulley 12, so that continuous variation in drive ratio is accomplished.

When the driven pulley 13 revolves at a speed exceeding a predetermined revolution, the clutch shoe 133D of the clutch inner 133 of the centrifugal clutch 73 is brought into contact with the inner circumferential surface of the clutch outer 131. The clutch inner 133 and the clutch outer 131 thus start rotating together, so that the power is transmitted from the driven pulley 13 to the driven shaft 18 and is inputted into the power-system reduction gear mechanism 16.

The power-system reduction gear mechanism 16 ranging from the driven shaft 18 to the rear axel 19 includes gears each of which is disposed on the corresponding one of the following three rotational shafts. A first one of the three shafts is the right-hand side half of the driven shaft 18 of the V-belt type continuously variable transmission 15. A small-diameter gear 140 is formed in this driven shaft 18. A second one of the three shafts is an intermediate shaft 142 that is rotatably supported by the transmission case 33B and the rear-side gear cover 37 with needle bearings 141, 141 set in between. A large-diameter gear 144 that meshes with the small-diameter gear 140 of the driven shaft 18 is fitted onto the intermediate shaft 142 so as to form a unit. In addition, a small-diameter gear 143 is carved in the intermediate shaft 142 per se. A third one of the three shafts is the rear axle 19 that is rotatably supported by the transmission case 33B and the rear-side gear cover 37 respectively with ball bearings 145, 145 set in between. A large-diameter gear 146 that meshes with the small-diameter gear 143 of the intermediate shaft 142 is fitted onto the rear axle 19. With this configuration, the torque of the driven shaft 18 is transmitted to the rear axle 19 while the speed of the torque is reduced by the power-system reduction gear mechanism 16. The rear wheel WR is fixed on the rear axle 19 to form a single body.

As has been described in detail thus far, this embodiment of the present invention brings about the following advantageous effects.
(1) When viewed from a side, the electric motor for drive-pulley control, the reduction gear mechanism for the drive-pulley control unit, and the center of the balancer are placed between the joint plane where the cylinder block is coupled to the crankcase and a plane which passes on the center of the crankshaft and which is parallel to the joint plane. The above-described concentrated placement of the electric motor for drive-pulley control, the reduction gear mechanism for the drive-pulley control unit and the balancer allows the power unit to be made compact in size. The concentration, thus achieved, of the heavy objects on the center of the power unit, which is composed of the engine and the transmission, helps the balance to be maintained, and results in better running performance.
(2) The concentrated placement of the heavy objects, such as the electric motor for drive-pulley control, the reduction gear mechanism for the drive-pulley control unit, and the balancer, on a position near the point about which the power unit moves swinging, contributes to the reduction of the vibration.
(3) The electric motor for drive pulley control and the reduction gear mechanism for drive-pulley control unit are disposed above the crankshaft. Such placement leaves an extra space at the other side of the cylinder axis, that is, below the cylinder axis. Accordingly, a space for placing the reed valve for supplying secondary air can be obtained on the side surface of the cylinder, so that the piping arrangement for supplying secondary air can be simplified.
(4) The electric motor for drive-pulley control is mounted from the outer side of the transmission casing. Accordingly, the maintenance work for the electric motor for drive-pulley control is made easier.

### [Explanation of the Reference Numerals]

P...POWER UNIT; 11...ENGINE; 12...DRIVE PULLEY; 13...DRIVEN PULLEY; 14...V-BELT; 15...V-BELT TYPE CONTINUOUSLY VARIABLE TRANSMISSION; 17...CRANKSHAFT; 20...ENGINE HANGER; 22...CYLINDER BLOCK; 23...CYLINDER HEAD; 24...CYLINDER-HEAD COVER; 28...ELECTRIC MOTOR FOR DRIVE-PULLEY CONTROL; 29...REDUCTION GEAR MECHANISM FOR DRIVE-PULLEY CONTROL UNIT; 32...REED VALVE FOR SUPPLYING SECONDARY AIR; 33A...LEFT-HAND SIDE CRANKCASE; 33B...TRANSMISSION CASE; 34...RIGHT-HAND SIDE CRANKCASE; 35...TRANSMISSION-CASE COVER; 36...CONTROL-UNIT GEAR COVER; 37...REAR-SIDE GEAR COVER; 39...CRANKCASE; 40...TRANSMISSION CASING; 61A, 61A...CRANK WEBS; 62...BALANCER DRIVE GEAR; 63...BALANCER; 64...BALANCER SHAFT.

## Claims

1. A power unit (P) comprising:
an engine (11) including a cylinder block (22), a crankcase (39) and a balancer (63);
a transmission casing (40) extending rearwards from the crankcase (39) of the engine (11);
a V-belt type continuously variable transmission (14) which is installed in the transmission casing (40) and which transmits the drive power from the engine (11) to a drive wheel; and
an electric motor (28) for drive-pulley control controlling the width of the groove of a drive pulley (12) in the V-belt type continuously variable transmission (14) by means of a reduction gear mechanism for drive-pulley control unit (29), **characterized in that**
when viewed from a side, the electric motor (28) for drive-pulley control, the reduction gear mechanism for the drive-pulley control unit (29), and the center (64) of the rotational axis of the balancer (63) are placed between a joint plane (C) defined by the coupling of the cylinder block (22) to the crankcase (39), and a plane (D) containing the center of the crankshaft (17) which is parallel to the joint plane (C).

2. The power unit (P) according to claim 1 wherein an engine hanger (20) is disposed in a vicinity of the joint plane.

3. The power unit according to any one of claims 1 and 2
wherein the electric motor (28) for drive pulley control and the reduction gear mechanism for drive-pulley control unit (29) are disposed above the crankshaft(17), and
a reed valve for supplying secondary air is disposed at the other side of the cylinder axis.

4. The power unit (P) according to any one of claims 1 to 3 wherein the electric motor (28) for drive-pulley control is mounted from the outer side of the transmission casing (40).

## Patentansprüche

1. Antriebseinheit (P), umfassend:
einen Motor (11), welcher einen Zylinderblock (22), ein Kurbelgehäuse (39) und einen Stabilisator (63) enthält;
ein Getriebegehäuse (40), welches sich nach hinten von dem Kurbelgehäuse (39) des Motors (11) erstreckt;
ein stufenloses Getriebe (14) des Keilriementyps, welches in dem Getriebegehäuse (40) installiert ist, und welches die Antriebskraft von dem Motor (11) zu einem Antriebsrad überträgt; und
einen elektrischen Motor (28) zur Antriebsscheibensteuerung, welche die Breite der Aussparung einer Antriebsscheibe (12) in dem stufenlosen Getriebe (14) des Keilriementyps mittels eines Untersetzungsgetriebemechanismus für eine Antriebsscheibensteuereinheit (29) steuert, **dadurch gekennzeichnet, dass**
wenn von einer Seite betrachtet, der elektrische Motor (28) zur Antriebsscheibensteuerung, der Untersetzungsgetriebemechanismus für die Antriebsscheibensteuereinheit (29) und das Zentrum (64) der Drehachse des Stabilisators (63) zwischen einer gemeinsamen Ebene (C), welche durch ein Koppeln des Zylinderblocks (22) an das Kurbelgehäuse (39) definiert wird, und einer Ebene (D), welche das Zentrum der Kurbelwelle (17) umfasst, und welche parallel zu der Verbindungsebene (C) ist, platziert sind.

2. Antriebseinheit (P) gemäß Anspruch 1, wobei eine Motoraufhängung (20) in einer Nähe der Verbindungsebene angeordnet ist.

3. Antriebseinheit gemäß irgendeinem der Ansprüche 1 und 2, wobei der elektrische Motor (28) zur Antriebsscheibensteuerung und der Untersetzungsgetriebemechanismus für eine Antriebsscheibensteuereinheit (29) über der Kurbelwelle (17) angeordnet sind, und
ein Blattventil zum Zuführen von sekundärer Luft an der anderen Seite der Zylinderachse angeordnet ist.

4. Antriebseinheit (P) gemäß irgendeinem der Ansprüche 1 bis 3, wobei der elektrische Motor (28) zur Antriebsscheibensteuerung von der äußeren Seite des Getriebegehäuses (40) montiert ist.

## Revendications

1. Unité de puissance (P) comprenant :
un moteur à combustion interne (11) comprenant un bloc-cylindres (22), un carter (39) et un balancier (63) ;
un carter de transmission (40) s'étendant vers l'arrière à partir du carter (39) du moteur à combustion interne (11) ;
une transmission à variation continue du type à courroie en V (14) qui est installée dans le carter de transmission (40) et qui transmet la puissance d'entraînement du moteur à combustion interne (11) à une roue motrice ; et
un moteur électrique (28) pour la commande de poulie d'entraînement commandant la largeur de la gorge d'une poulie d'entraînement (12) dans la transmission à variation continue du type à courroie en V (14) au moyen d'un mécanisme de réduction pour une unité de commande de poulie d'entraînement (29), **caractérisée en ce que**
lorsqu'ils sont vus à partir d'un côté, le moteur électrique (28) pour la commande de poulie d'entraînement, le mécanisme de réduction pour l'unité de commande de poulie d'entraînement (29) et le centre (64) de l'axe de rotation du balancier (63) sont placés entre un plan de jonction (C) défini par l'accouplement du bloc-cylindres (22) avec le carter (39) et un plan (D) contenant le centre du carter (17) et qui est parallèle au plan de jonction (C).

2. Unité de puissance (P) selon la revendication 1, dans laquelle un élément de suspension de moteur à combustion interne (20) est disposé dans un voisinage du plan de jonction.

3. Unité de puissance selon l'une quelconque des revendications 1 et 2, dans laquelle le moteur électrique (28) pour la commande de poulie d'entraînement et le mécanisme de réduction pour l'unité de commande de poulie d'entraînement (29) sont disposés au-dessus du carter (17), et
une soupape d'injection d'air secondaire pour délivrer de l'air secondaire est disposée de l'autre côté de l'axe de cylindre.

4. Unité de puissance (P) selon l'une quelconque des revendications 1 à 3, dans laquelle le moteur électrique (28) pour la commande de poulie d'entraînement est monté à partir du côté externe du carter de transmission (40).
